# EUROPÄISCHE PATENTANMELDUNG

(11) **EP 4 344 145 A1**
(43) Veröffentlichungstag der Anmeldung: **27.03.2024**
(21) Anmeldenummer: 23195951.1
(22) Anmeldetag: 07.09.2023
(51) Int. Cl.: H04L 41/0246, H04L 41/0806, H04L 41/344, H04L 9/40, H04L 41/28

(54) **EINFACHE UND SICHERE INBETRIEBNAHME EINER MOBILEN MOBILFUNKSTATION**

(30) Priorität: 23.09.2022 DE 102022124502
(71) Anmelder: Deutsche Telekom AG, 53113 Bonn (DE)
(72) Erfinder: KELLER, Stefan, 78662 Bösingen (DE)
(74) Vertreter: RDL Patentanwälte PartG mbB

(57) **Zusammenfassung**

Verfahren zum Inbetriebnehmen einer Mobilfunkstation, bei dem eine in Betrieb zu nehmende Mobilfunkstation gestartet wird und die gestartete Mobilfunkstation einen normalen Betrieb beginnt, Mobilfunkstation für ein Mobilfunknetz und Computerprogrammprodukt.

## Beschreibung

Die Erfindung betrifft ein Verfahren zum Inbetriebnehmen einer Mobilfunkstation, bei dem eine in Betrieb zu nehmende Mobilfunkstation gestartet wird und die gestartete Mobilfunkstation einen normalen Betrieb beginnt. Ferner betrifft die Erfindung eine Mobilfunkstation für ein Mobilfunknetz und ein Computerprogrammprodukt.

Ein Mobilfunknetz umfasst eine Mehrzahl von Mobilfunkstationen, die üblicherweise als Base Transceiver Stations, BTS, bezeichnet werden. Jede Mobilfunkstation stellt eine sogenannte Funkzelle bereit. Ein in der Funkzelle angeordnetes Endgerät kann sich drahtlos mit der Mobilfunkstation verbinden. Die Mobilfunkstation ist über ein Kabel, zumeist ein Glasfaserkabel, mit einem Core des Mobilfunknetzes verbunden. Das Core des Mobilfunknetzes umfasst eine Mehrzahl von Servern, die jeweils zentrale Funktionen für das Mobilfunknetz bereitstellen.

Zum Vergrößern einer Netzabdeckung des Mobilfunknetzes, d.h. zum Beseitigen von sogenannten Funklöchern, werden sukzessive neue Mobilfunkstationen an neuen Standorten in Betrieb genommen. Das Inbetriebnehmen einer solchen ortsfesten Mobilfunkstation an einem neuen Standort ist zumindest wegen der notwendigen Kabelverbindung aufwändig und langwierig. Abgesehen davon müssen in dem Core des Mobilfunknetzes zahlreiche Konfigurationen manuell vorgenommen werden. Infolgedessen ist das Inbetriebnehmen einer neuen Mobilfunkstation kostspielig und kurzfristig praktisch ausgeschlossen.

Demgegenüber stehen mobile, d.h. nicht ortsfeste, Mobilfunkstationen. Eine solche mobile Mobilfunkstation ist dafür vorgesehen, an einem Standort einen zeitlich begrenzten Bedarf an spektralen Ressourcen zu decken. Die mobile Mobilfunkstation stellt also lediglich vorübergehend eine Funkzelle bereit. Allerdings wird ein bestimmungsgemäßes Verwenden der mobilen Mobilfunkstation wegen der hohen Integrationskosten und der langen Integrationszeiten stark eingeschränkt.

Es ist daher eine Aufgabe der Erfindung, ein Verfahren zum Inbetriebnehmen einer Mobilfunkstation vorzuschlagen, das einfach, sicher und binnen einer kurzen Zeitspanne ausgeführt werden kann. Weitere Aufgaben der Erfindung sind, eine Mobilfunkstation für ein Mobilfunknetz und ein Computerprogrammprodukt bereitzustellen.

Ein Gegenstand der Erfindung ist ein Verfahren zum Inbetriebnehmen einer Mobilfunkstation, BTS, bei dem eine in Betrieb zu nehmende Mobilfunkstation gestartet wird und die gestartete Mobilfunkstation einen normalen Betrieb beginnt. Das Verfahren wird bei jedem Integrieren einer Mobilfunkstation in ein Mobilfunknetz ausgeführt, beim dauerhaften Ausbau des Mobilfunknetzes ebenso wie beim vorübergehenden Erweitern des Mobilfunknetzes.

Erfindungsgemäß verbindet sich die gestartete Mobilfunkstation mit dem Internet und empfängt die Mobilfunkstation über das Internet eine Konfigurationsdatei von einem mit dem Internet verbundenen Mobility Management Entity, MME, eines Cores eines Mobilfunknetzes, konfiguriert die empfangene Konfigurationsdatei die Mobilfunkstation automatisch und beginnt die konfigurierte Mobilfunkstation den normalen Betrieb. Die Inbetriebnahme der Mobilfunkstation beruht auf einer Verbindung zum Internet und einer von dem MME gespeicherten Konfigurationsdatei. Die Mobilfunkstation kann jede Verbindung zum Internet verwenden, die für die Mobilfunkstation bereitsteht.

Weder wird zum Integrieren der Mobilfunkstation ein Kabel benötigt noch müssen in dem Core des Mobilfunknetzwerks umfangreiche Konfigurationen vorgenommen werden. Infolgedessen wird die Mobilfunkstation auf eine einfache Weise und binnen einer kurzen Zeitspanne in Betrieb genommen.

Vor dem Starten kann die Mobilfunkstation an einem Standort angeordnet und kann an dem Standort eine Verbindung mit dem Internet bereitgestellt werden. Jeder Standort, an dem eine Verbindung mit dem Internet bereitgestellt werden kann, ist für die Mobilfunkstation geeignet. So kann für die Mobilfunkstation ein Veranstaltungsgelände als der Standort gewählt werden, das zumindest während eines Veranstaltungszeitraums einen Internetzugang bereitstellt.

Beispielsweise wird die Verbindung mittels eines Satelliten, eines Glasfaserrouters, eines DSL-Routers oder eines Mobilfunkstation-Routers bereitgestellt. Die Satellitenverbindung steht praktisch überall bereit. Der Glasfaserrouter kann an dem Standort der in Betrieb zu nehmenden Mobilfunkstation bereitstehen. Der DSL-Router kann an dem Standort häufig auf einfache Weise bereitgestellt werden. Der Mobilfunkstation-Router ist eine Komponente einer Mobilfunkstation. Die Aufzählung ist nicht abschließend. Weitere bekannte oder zukünftige Varianten für die Verbindung mit dem Internet sind ohne Weiteres möglich.

Vorteilhaft wird vor dem Empfangen der Konfigurationsdatei die Mobilfunkstation von einem durch eine in der Mobilfunkstation gespeicherten IP-Adresse bestimmten ersten Zugangspunkt, POP (Point of Presence), eines Cores des Internets anhand einer Kennung der Mobilfunkstation und einer MAC-Adresse der Mobilfunkstation authentifiziert. Die IP (Internet Protocol)-Adresse ist dem Zugangspunkt wie üblich zugeordnet. Die MAC (Media Access Control)-Adresse ist eine weltweit eindeutige Geräteaddresse, die ausschließlich der Mobilfunkstation zugeordnet ist. Die Kennung und MAC-Adresse sind ebenfalls in der Mobilfunkstation gespeichert. Die Kennung und die MAC-Adresse sind zudem in dem ersten Zugangspunkt zwecks der Authentifizierung gespeichert. Die Authentifizierung erhöht eine Sicherheit des Verfahrens.

Bevorzugt verifiziert nach dem Authentifizieren ein IPSec-Server des Cores des Internets ein IPSec-Zertifikat der Mobilfunkstation und wird nach dem Verifizieren ein mit dem verifizierten IPSec-Zertifikat gesicherter VPN (Virtual Private Network)-Tunnel zwischen der Mobilfunkstation und einem MC-Media-Gateway, MC-MGW, als einem zweitem Zugangspunkt des Cores des Internets bereitgestellt. Das IPSec-Zertifikat ist in der Mobilfunkstation gespeichert und dient nach einer erfolgreichen Verifizierung zum Sichern des VPN-Tunnels, was mit einer weiter erhöhten Sicherheit des Verfahrens einhergeht.

Vor dem Empfangen der Konfigurationsdatei kann die Mobilfunkstation GPS (Global Positioning System)-Positionsdaten der Mobilfunkstation über den gesicherten VPN-Tunnel zu dem MME übermitteln und kann das MME die Konfigurationsdatei abhängig von den übermittelten GPS-Positionsdaten aktualisieren. Die Konfigurationsdatei kann also in Bezug auf den Standort der Mobilfunkstation generisch sein. Eine generische Konfigurationsdatei und das Übertragen der GPS-Positionsdaten unterstützen in besonderer Weise eine mobile Mobilfunkstation.

Vor dem Beginnen des normalen Betriebs stellt das MME vorteilhaft ein Control Plane und ein Operation and Maintenance Center, OMC, für die Mobilfunkstation bereit. Das Control Plane und das OMC gehören zu einer administrativen Infrastruktur der Mobilfunkstation. Dagegen werden applikative Daten auf einem sogenannten User Plane übertragen, welches von dem Control Plane verschieden ist. Dem Bereitstellen kann ein Freischalten der Mobilfunkstation zum Core des Mobilfunknetzes vorausgehen.

Während des begonnenen normalen Betriebs kann die Mobilfunkstation eine Verbindung mit dem Internet für ein mit der Mobilfunkstation drahtlos verbundenes Endgerät bereitstellen. Applikative Datenübertragungen zwischen dem Endgerät und mit dem Internet verbundenen Servern sind eine relevante Nutzungsart des Mobilfunknetzes und bilden einen Hauptanteil des normalen Betriebs.

In jeweiligen Ausführungsformen stellt die Mobilfunkstation die Verbindung mit dem Internet mittels einer Firewall des Cores des Mobilfunknetzes, eines Serving Gateways, S-GW, & Packet Data Network Gateways, P-GW, des Cores des Mobilfunknetzes und eines L-PGW des Cores des Internets oder mittels eines Routers der Mobilfunkstation bereit. Mit anderen Worten werden entweder die Cores von Internet und Mobilfunknetz für das Bereitstellen der Verbindung mit dem Internet genutzt oder die Verbindung mit dem Internet wird von der Mobilfunkstation unmittelbar bereitgestellt.

Ein weiterer Gegenstand der Erfindung ist System für ein Mobilfunknetz, das eine Mobilfunkstation und ein MME eines Cores des Mobilfunknetzes umfasst.

Erfindungsgemäß ist das System konfiguriert, ein Verfahren nach einer Ausführungsform der Erfindung auszuführen. Das System ermöglicht ein einfaches und sicheres Inbetriebnehmen der Mobilfunkstation binnen einer kurzen Zeitspanne.

Selbstverständlich sind auch die Mobilfunkstation und das MME Gegenstände der Erfindung. Die erfindungsgemäße Mobilfunkstation speichert die IP-Adresse des ersten Zugangspunkts, die Kennung, die MAC-Adresse und das IPSec-Zertifikat. Das erfindungsgemäße MME speichert die Konfigurationsdatei. Sowohl die erfindungsgemäße Mobilfunkstation als auch das erfindungsgemäße MME sind ausgebildet, an einem Verfahren nach einer Ausführungsform der Erfindung mitzuwirken.

Ein weiterer Gegenstand der Erfindung ist ein Computerprogrammprodukt, umfassend ein digitales Speichermedium mit einem Programmcode. Das digitale Speichermedium ist beispielhaft und nicht einschränkend als eine CD (Compact Disk), eine DVD (Digital Versatile Disk), ein USB (Universal Serial Bus)-Stick, eine Festplatte (Harddisk, HD), ein Speicherchip (Random Access Memory, RAM), eine Internet-Cloud oder dergleichen ausgebildet.

Erfindungsgemäß veranlasst der Programmcode eine Rechenvorrichtung, als eine Mobilfunkstation oder als ein MME eines Cores eines Mobilfunknetzes an einem Verfahren nach einer Ausführungsform der Erfindung mitzuwirken, wenn der Programmcode von einem Prozessor der Rechenvorrichtung ausgeführt wird. Der Programmcode implementiert ein einfaches, sichereres und binnen einer kurzen Zeitspanne ausführbares Verfahren zum Inbetriebnehmen einer Mobilfunkstation.

Ein wesentlicher Vorteil des erfindungsgemäßen Verfahrens besteht darin, dass eine Mobilfunkstation einfach, sicher und binnen einer kurzen Zeitspanne in Betrieb genommen werden kann. Mittels des Verfahrens lassen sich insbesondere mobile, d.h. nicht ortsfeste, Mobilfunkstationen kostengünstig und kurzfristig in ein Mobilfunknetz integrieren.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben. Es zeigt
- Fig. 1: ein System nach einer ersten Ausführungsform der Erfindung für ein Mobilfunknetz;
- Fig. 2: ein System nach einer zweiten Ausführungsform der Erfindung für ein Mobilfunknetz.

In der Zeichnung sind korrespondierende Merkmale mit identischen Bezugszeichen versehen.

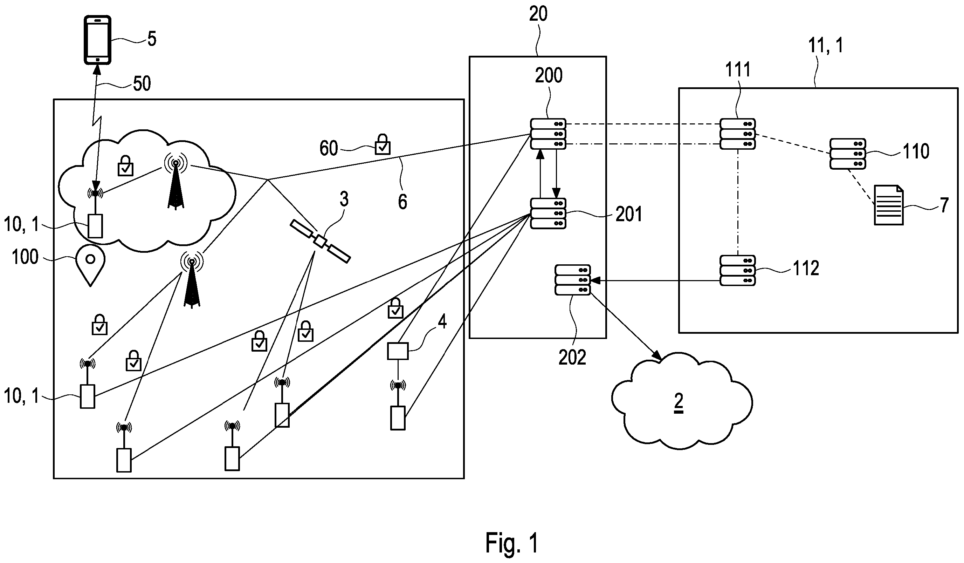

Fig. 1 zeigt ein System nach einer ersten Ausführungsform der Erfindung für ein Mobilfunknetz 1. Das System umfasst eine Mobilfunkstation, BTS (Base Transceiver Station), 10 und ein MME 110 eines Cores 11 des Mobilfunknetzes 1 und ist konfiguriert, ein Verfahren nach einer Ausführungsform der Erfindung zum Inbetriebnehmen der Mobilfunkstation 10 auszuführen.

Das System kann mittels eines Computerprogrammprodukts implementiert sein, das ein digitales Speichermedium mit einem Programmcode umfasst. Der eine Programmcode veranlasst eine Rechenvorrichtung, als die Mobilfunkstation 10 oder als der MME 110 des Cores 11 des Mobilfunknetzes 1 an dem nachfolgend beschriebenen Verfahren mitzuwirken, wenn der Programmcode von einem Prozessor der Rechenvorrichtung ausgeführt wird.

Die in Betrieb zu nehmende Mobilfunkstation 10 wird gestartet. Vor dem Starten kann die Mobilfunkstation 10 an einem Standort 100 angeordnet und kann an dem Standort 100 eine Verbindung 6 mit dem Internet 2 bereitgestellt werden. Die Verbindung 6 wird beispielsweise mittels eines Satelliten 3, eines Glasfaserrouters, eines DSL-Routers 4 oder eines Mobilfunkstation-Routers bereitgestellt.

Die gestartete Mobilfunkstation 10 verbindet sich mit dem Internet 2 und empfängt über das Internet 2 eine Konfigurationsdatei 7 von einem mit dem Internet 2 verbundenen MME 110 eines Cores 11 des Mobilfunknetzes 1. Vor dem Empfangen der Konfigurationsdatei 7 wird die Mobilfunkstation 10 vorteilhaft von einem (nicht dargestellten) durch eine in der Mobilfunkstation 10 gespeicherte IP-Adresse bestimmten ersten Zugangspunkt, POP (Point of Presence), eines Cores 20 des Internets 2 anhand einer Kennung der Mobilfunkstation 10 und einer MAC-Adresse der Mobilfunkstation 10 authentifiziert. Ferner kann vor dem Empfangen der Konfigurationsdatei 7 die Mobilfunkstation 10 GPS-Positionsdaten der Mobilfunkstation 10 über einen gesicherten VPN-Tunnel 60 zu dem MME 110 übermitteln und kann das MME 110 die Konfigurationsdatei 7 abhängig von den übermittelten GPS-Positionsdaten aktualisieren.

Nach dem Authentifizieren kann ein IPSec-Server 201 des Cores 20 des Internets 2 ein IPSec-Zertifikat der Mobilfunkstation 10 verifizieren und kann nach dem Verifizieren der mit dem verifizierten IPSec-Zertifikat gesicherte VPN-Tunnel 60 zwischen der Mobilfunkstation 10 und einem MC-Media-Gateway, MC-MGW, 200 als einem zweitem Zugangspunkt des Cores 20 des Internets 2 bereitgestellt werden. Der zweite Zugangspunkt kann mit dem ersten Zugangspunkt identisch sein.

Die empfangene Konfigurationsdatei 7 konfiguriert die Mobilfunkstation 10 automatisch.

Die konfigurierte Mobilfunkstation 10 beginnt einen normalen Betrieb. Vor dem Beginnen des normalen Betriebs kann das MME 110 ein Control Plane und ein Operation and Maintenance Center, OMC, für die Mobilfunkstation 10 bereitstellen. Dem Bereitstellen kann ein Freischalten der Mobilfunkstation 10 zum Core 11 des Mobilfunknetzes 1 vorausgehen.

Während des begonnenen normalen Betriebs stellt die Mobilfunkstation 10 günstigerweise für ein mit der Mobilfunkstation 10 drahtlos verbundenes Endgerät 5 eine Verbindung 50 mit dem Internet 2 bereit. Die Mobilfunkstation 10 kann die Verbindung mit dem Internet 2 mittels einer Firewall 111 des Cores 11 des Mobilfunknetzes 1, eines Serving Gateways, S-GW, & Packet Data Network Gateways, P-GW, 112 des Cores 11 des Mobilfunknetzes 1 und eines L-PGW des Cores 20 des Internets 2 bereitstellen.

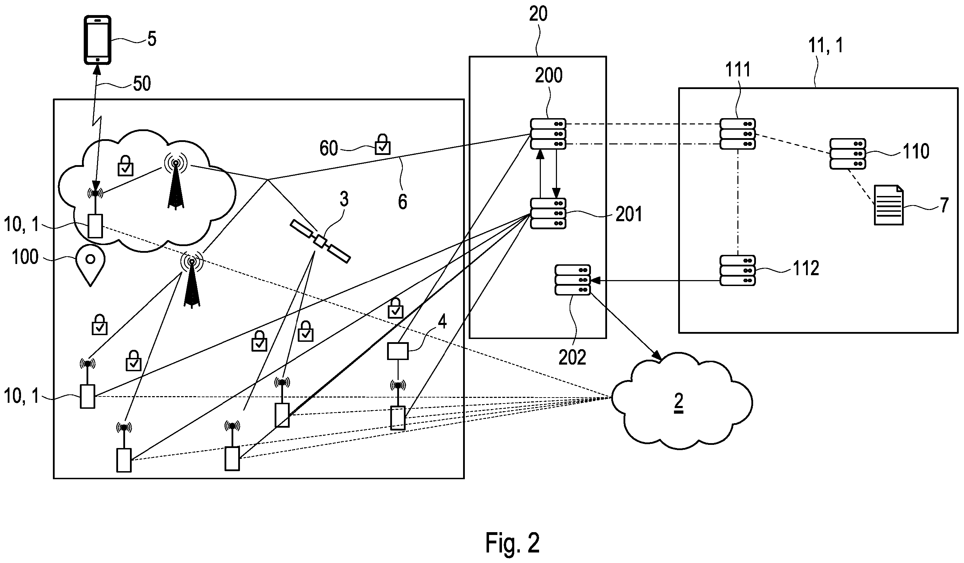

Fig. 2 zeigt ein System nach einer zweiten Ausführungsform der Erfindung für das Mobilfunknetz 1. Das System unterscheidet sich von dem in Fig. 1 gezeigten System dadurch, dass die Mobilfunkstation 10 für ein mit der Mobilfunkstation 10 drahtlos verbundenes Endgerät 5 eine Verbindung 50 mit dem Internet 2 mittels eines Routers der Mobilfunkstation 10 bereitstellt.

### Bezugszeichenliste

- 1: Mobilfunknetz
- 10: Mobilfunkstation
- 100: Standort
- 11: Core
- 110: MME
- 111: Firewall
- 112: S-GW & P-GW
- 2: Internet
- 20: Core
- 200: MC-MGW
- 201: IPSec-Server
- 202: L-PGW
- 3: Satellit
- 4: DSL-Router
- 5: Endgerät
- 50: Verbindung
- 6: Verbindung
- 60: VPN-Tunnel
- 7: Konfigurationsdatei

## Patentansprüche

1. Verfahren zum Inbetriebnehmen einer Mobilfunkstation (10), BTS, bei dem
- eine in Betrieb zu nehmende Mobilfunkstation (10) gestartet wird;
- die gestartete Mobilfunkstation (10) sich mit dem Internet (2) verbindet und über das Internet (2) eine Konfigurationsdatei (7) von einem mit dem Internet (2) verbundenen MME (110) eines Cores (11) eines Mobilfunknetzes (1) empfängt;
- die empfangene Konfigurationsdatei (7) die Mobilfunkstation (10) automatisch konfiguriert; und
- die konfigurierte Mobilfunkstation (10) einen normalen Betrieb beginnt.

2. Verfahren nach Anspruch 1, bei dem vor dem Starten die Mobilfunkstation (10) an einem Standort (100) angeordnet und an dem Standort (100) eine Verbindung (6) mit dem Internet (2) bereitgestellt werden.

3. Verfahren nach Anspruch 1 oder 2, bei dem die Verbindung (6) mittels eines Satelliten (3), eines Glasfaserrouters, eines DSL-Routers (4) oder eines Mobilfunkstation-Routers bereitgestellt wird.

4. Verfahren nach einem der Ansprüche 1 bis 3, bei dem vor dem Empfangen der Konfigurationsdatei (7) die Mobilfunkstation (10) von einem durch eine in der Mobilfunkstation (10) gespeicherte IP-Adresse bestimmten ersten Zugangspunkt, POP, eines Cores (20) des Internets (2) anhand einer Kennung der Mobilfunkstation (10) und einer MAC-Adresse der Mobilfunkstation (10) authentifiziert wird.

5. Verfahren nach Anspruch 4, bei dem nach dem Authentifizieren ein IPSec-Server (201) des Cores (20) des Internets (2) ein IPSec-Zertifikat der Mobilfunkstation (10) verifiziert und nach dem Verifizieren ein mit dem verifizierten IPSec-Zertifikat gesicherter VPN-Tunnel (60) zwischen der Mobilfunkstation (10) und einem MC-Media-Gateway, MC-MGw, (200) als einem zweitem POP-Server des Cores (20) des Internets (2) bereitgestellt wird.

6. Verfahren nach Anspruch 5, bei dem vor dem Empfangen der Konfigurationsdatei (7) die Mobilfunkstation (10) GPS-Positionsdaten der Mobilfunkstation (10) über den gesicherten VPN-Tunnel (60) zu dem MME (110) übermittelt und das MME (110) die Konfigurationsdatei (7) abhängig von den übermittelten GPS-Positionsdaten aktualisiert.

7. Verfahren nach einem der Ansprüche 1 bis 6, bei dem vor dem Beginnen des normalen Betriebs das MME (110) ein Control Plane und ein Operation and Maintenance Center, OMC, für die Mobilfunkstation (10) bereitstellt und/oder während des begonnenen normalen Betriebs die Mobilfunkstation (10) für ein mit der Mobilfunkstation (10) drahtlos verbundenes Endgerät (5) eine Verbindung (50) mit dem Internet (2) bereitstellt.

8. Verfahren nach Anspruch 7, bei dem die Mobilfunkstation (10) die Verbindung mit dem Internet (2) mittels einer Firewall (111) des Cores (11) des Mobilfunknetzes (1), eines Serving Gateways, S-GW, & Packet Data Network Gateways, P-GW, (112) des Cores (11) des Mobilfunknetzes (1) und eines L-PGw des Cores (20) des Internets (2) oder mittels eines Routers der Mobilfunkstation (10) bereitstellt.

9. System für ein Mobilfunknetz (1), das eine Mobilfunkstation (10) und ein MME (110) eines Cores (11) des Mobilfunknetzes (1) umfasst und konfiguriert ist, ein Verfahren nach einem der Ansprüche 1 bis 8 auszuführen.

10. Computerprogrammprodukt, umfassend ein digitales Speichermedium mit einem Programmcode, der eine Rechenvorrichtung veranlasst, als eine Mobilfunkstation (10) oder als ein MME (110) eines Cores (11) eines Mobilfunknetzes (1) an einem Verfahren nach einem der Ansprüche 1 bis 8 mitzuwirken, wenn der Programmcode von einem Prozessor der Rechenvorrichtung ausgeführt wird.
